## Europäisches Patentamt

## European Patent Office

## Office européen des brevets

(19)

(11) Veröffentlichungsnummer: **0 133 967**
A1

(12) **EUROPÄISCHE PATENTANMELDUNG**

(21) Anmeldenummer: **84108935.2**

(22) Anmeldetag: **27.07.84**

(51) Int. Cl.⁴: **F 16 H 1/06,** B 21 B 39/02,
F 16 D 1/08

(30) Priorität: **27.07.83 DE 3327134**
**03.08.83 DE 8322412 U**

(43) Veröffentlichungstag der Anmeldung: **13.03.85**
**Patentblatt 85/11**

(84) Benannte Vertragsstaaten: **AT BE CH DE FR GB IT LI LU**
**NL SE**

(71) Anmelder: **Klose GmbH & Co. KG, Brunnenstrasse 2,**
**D-5912 Hilchenbach 1 (DE)**

(72) Erfinder: **Müller, Erhard, zur Lichtenhardt 3,**
**D-5910 Kreuztal-Kredenbach (DE)**

(74) Vertreter: **KUHNEN & WACKER Patentanwaltsbüro,**
**Schneggstrasse 3-5 Postfach 1729, D-8050 Freising (DE)**

(54) **Getriebemotor.**

(57)    Ein Getriebemotor (1) mit einer Getriebeantriebswelle (5)
und einer Abtriebshohlwelle (7) weist eine Spannvorrichtung
(16) auf, mit der eine Antriebswelle (8) der Arbeitsmaschine
wie eines Förderorgans derart eingespannt werden kann, daß
eine axiale Fixierung der Antriebswelle (8) der Arbeitsmaschine durch eine am eingeführten Endbereich der Antriebswelle (8) angreifende Spannvorrichtung nicht erforderlich ist.
Die Antriebswelle (8) der Arbeitsmaschine liegt an zwei Stützflächen (22, 23) an Teilbereichen der inneren Umfangsoberfläche der Abtriebshohlwelle (7) an, wobei die eine Stützfläche
(23) konisch ist und somit spielfrei sitzt. Durch eine Abdrückvorrichtung (Mutter 35) kann der Klemmsitz zwischen Antriebswelle (8) und Abtriebshohlwelle (7) durch mechanische
oder hydraulische Krafteinwirkung aufgehoben werden.

ACTORUM AG

0133967

Klose GmbH & Co. KG

5912 Hilchenbach

55 KL01 27 2/öc
27. Juli 1984

## Getriebemotor

Die Erfindung betrifft einen Getriebemotor nach dem
Oberbegriff des Anspruchs 1.

Getriebemotoren dieser Art werden häufig als Aufsteck-
Getriebemotoren, z.B. in Walzwerken zum Antreiben von
Rollgängen, eingesetzt. Diese Rollgänge dienen als
Transportstraßen für das zu berarbeitende Walzgut,
insbesondere als Zubringerstraßen zu den einzelnen
Walzstationen und deren Hilfseinrichtungen.

Aufsteck-Getriebemotoren sind zumeist zweistufig aufgebaut, wobei zwischen der Getriebeantriebswelle, die
meistens gleichzeitig Motorwelle ist, und der Getriebeabtriebswelle, die als Hohlwelle ausgebildet mit der
Antriebswelle der Arbeitsmaschine antriebsverbunden
ist, zwei Zahnradpaarungen derart angeordnet sind, daß
die Drehzahl des Motors in einem bestimmten Verhältnis,
das den jeweiligen Arbeitsbedingungen angepaßt ist,
untersetzt wird. Ein Nachteil derartiger zweistufiger Getriebemotoren ist der relativ hohe bauliche Aufwand, bedingt durch die Anordnung zweier Zahnradpaarungen und der damit verbundenen Lagerstellen, die einerseits einen erheblichen Kostenaufwand verursachen und andererseits die Spielanteile der Zahnradpaarungen und nachgeschalteter Elemente im Bereich der gewählten Untersetzung auf die Getriebeantriebswelle übertragen. Dieser Nachteil ist insbesondere im instationären Bereich, also bei häufiger Anlauf- und Bremsfolge, sowie beim Reversieren besonders deutlich spürbar. Je nach Zahnstellung wird der gesamte Spielanteil auf die Welle des Antriebsmotors übertragen und von diesem durchlaufen, wobei je nach Spielanteil und den Massenverhältnissen von Antriebsmotor und Arbeitsmaschine der Antriebsmotor nicht selten schon seine Enddrehzahl erreicht, bevor eine formschlüssige Verbindung zwischen Antriebsmotor und Arbeitsmaschine hergestellt ist. Der Antriebsmotor läuft dann mit seiner vollen kinetischen Energie gegen die noch verharrende Masse der Arbeitsmaschine und verursacht somit einen Stoß auf das Getriebe, der als Geschwindigkeitsstoß von dem Getriebe aufgenommen werden muß und zu größerer Dimensionierung des Getriebes führt. Die größeren Dimensionen bedeuten gleichzeitig höheres Gewicht und damit eine zusätzliche Belastung der Antriebswelle der Arbeitsmaschine und deren Fundament. Höhere Belastung der Antriebswelle der Arbeitsmaschine infolge höheren Gewichts, insbesondere aber erhöhter Massenwirkung bei herabfallendem Walzgut oder dgl., zieht eine Vergrößerung des Antriebswellenquerschnittes der Arbeitsmaschine nach sich, die wiederum eine Vergrößerung der Getriebeabtriebswelle bewirkt. Die Lagerstellen und damit das ganze Getriebe müssen größer bemessen werden, was wiederum ein höheres Gewicht des Getriebes bedeutet und somit wieder größere Querschnitte der Antriebswelle der Arbeitsmaschine bedingt.

Diese Überlegungen zeigen, daß für viele Antriebsbedingungen ein einstufiger Getriebemotor besser geeignet ist. Hierbei ergibt sich jedoch das Problem, daß der Abstand zwischen Antriebswelle und Abtriebswelle des Getriebes infolge des Fortfalles einer Zahnradpaarung erheblich geringer ist als bei einem zweistufigen Getriebemotor. Wenn der Achsabstand der Antriebswelle und der Abtriebswelle kleiner wird als der Radius des Motorschildes, so überdeckt der Motorschild das hintere, motorseitige Ende der Abtriebswelle des Getriebes, und macht dieses unzugänglich. Soll das hintere, motorseitige Ende der Abtriebswelle zugänglich gehalten werden, um die bei zweistufigen Getrieben übliche axiale Fixierung der Abtriebswelle beibehalten zu können, so muß allein aus diesem Grunde der Achsabstand zwischen Antriebswelle und Abtriebswelle vergrößert werden. Diese willkürliche Vergrößerung de Achsabstandes und damit der Zahnraddurchmesser führt zu unnötigem Materialaufwand, großen Zahnrädern mit einem schlechten Ausnutzungsgrad, und einem größeren Getriebegehäuse, das ein Überschleppen des auf dem Rollgang geförderten Gutes behindern kann. Dem weiteren Nachteil eines dadurch vergrößerten Gewichtes kommt infolge der weiter oben dargelegten Gesichtspunkte besondere Bedeutung bei.

Die Zugänglichkeit des hinteren, motorseitigen Endbereiches der Abtriebswelle ist bei bekannten Aufsteck-Getriebemotoren deshalb von besonderer Bedeutung, weil in diesem Bereich die axiale Lagesicherung der Abtriebswelle bzw. der Antriebswelle der Arbeitsmaschine erfolgt. Die Abtriebswelle des Getriebemotors ist dabei in der Regel als Hohlwelle ausgebildet, in die die Antriebswelle der Arbeitsmaschine axial eingeführt ist. Die Drehmomentübertragung von der Getriebeabtriebswelle auf die Antriebswelle der Arbeitsmaschine erfolgt zumeist über eine formschlüssige Verbindung, beispielsweise über eine Paßfeder, eine Vielkeilverbindung oder ein Zahnwellenprofil. Die axiale Fixierung der Getriebeabtriebswelle auf der Antriebswelle der Arbeitsmaschine erfolgt dadurch, daß der Aufsteck-Getriebemotor bis zu einem Anschlagbund der Antriebswelle der Arbeitsmaschine aufgeschoben und mittels einer Abschlußkappe, die am hinteren, motorseitigen Ende der Getriebeabtriebswelle befestigt ist, und über eine oder auch mehrere mit der Abschlußkappe und der Antriebswelle der Arbeitsmaschine in Verbindung stehende, von der Motorseite aus zugängliche Schrauben axial vorgespannt und somit fixiert wird.

Die somit erforderliche Zugänglichkeit des hinteren, motorseitigen Endbereiches der Abtriebswelle des Getriebes bzw. der Antriebswelle der Arbeitsmaschine erfordert einen Achsabstand zwischen der Abtriebswelle und der Antriebswelle des Getriebes, der die radiale Erstreckung des Motorschildes übersteigt, damit dieser nicht den hinteren Endbereich der Abtriebswelle abdeckt und unzugänglich macht. Aus diesem Grunde wird selbst bei geringen Untersetzungsverhältnissen, die eine einstufige Untersetzung problemlos ermöglichen würden, häufig auf zweistufig ausgebildete Getriebe zurückgegriffen, um unter Verzicht auf eine ansonsten mögliche kompakte Bauform einen ausreichenden Achsabstand zu erhalten.

Demgegenüber liegt der vorliegenden Erfindung die Aufgabe zugrunde, einen Getriebemotor der im Oberbegriff des Anspruchs 1 angegebenen Gattung zu schaffen, welcher auch in Ausbildung als einstufiger Getriebemotor eine geringe Baugröße bei dennoch gleichzeitig sicherer axialer Fixierung der Abtriebswelle des Getriebes an der Antriebswelle der Arbeitsmaschine ermöglicht.

Die Lösung dieser Aufgabe erfolgt durch die kennzeichnenden Merkmale des Anspruchs 1.

Dadurch, daß die Abtriebswelle des Getriebes und damit der ganze Getriebemotor axial auf die Antriebswelle der Arbeitsmaschine aufgeschoben wird und in dieser Lage durch eine Spannvorrichtung, wie z.B. eine Schrumpfscheibe, und eine geeignete Ausbildung sowohl der Hohlwelle des Getriebes als auch der Antriebswelle der Arbeitsmaschine axial und radial lagegesichert ist, ist es nicht mehr notwendig, die Antriebswelle der Arbeitsmaschine am eingeführten motorseitigen Ende zu verspannen. Der Getriebemotor kann somit in seinem Aufbau sehr kompakt gehalten werden, da ein Zugang zu der Hohlwelle von der Motorseite her nicht mehr erforderlich ist. Die kompakte Bauweise führt auch zu entsprechend verringertem Materialaufwand bei der Herstellung und damit zu günstigeren Herstellungskosten. Da die Montage von Aufsteck-Getriebemotoren grundsätzlich diffizil ist, ergibt alleine die Gewichts- und Baugrößenverminderung eine nicht zu unterschätzende Montagevereinfachung.

Die Unteransprüche haben vorteilhafte Weiterbildungen der Erfindung zum Inhalt.

Durch die Maßnahmen des Anspruchs 2 wird eine infolge maximalen gegenseitigen Abstands der Stützflächen und der zugeordneten Lager momentenfeste und biegesteife Ausbildung erhalten und die Belastung im Bereich der Spannvorrichtung und des ihr zugeordneten Wälzlagers überschaubar gehalten, und werden auch bei Durchbiegungen der Antriebswelle der Arbeitsmaschine Kantenpressungen im Bereich der Spannvorrichtung weitestgehend vermieden.

Dadurch, daß gemäß Anspruch 3 eine der Stützflächen, im Falle einer zusätzlichen motorseitigen Stützfläche gemäß Anspruch 2 insbesondere diese zusätzliche Stützfläche konisch ausgebildet ist, ergibt sich einerseits eine vereinfachte Montage durch Selbstzentrierung des in die Abtriebshohlwelle einzuführenden Endes der Antriebswelle der Arbeitsmaschine und andererseits durch Spielfreiheit des konischen Sitzes der Stützfläche ein Wirksamwerden der Abstützkräfte vor Auftreten irgendeiner Verformung, wodurch die gemäß Anspruch 2 angestrebte zusätzliche Abstützung weiter gefördert wird. Infolge des konischen und damit in einem bestimmten axialen Bereich definierten Sitzes der Antriebswelle der Arbeitsmaschine in der Abtriebshohlwelle wird auch für die Demontage erreicht, daß nach einem Lösen des Reibschlusses an diesem konischen Sitz bereits Berührungsfreiheit zwischen der Antriebswelle der Arbeitsmaschine und dem Innenumfang der Abtriebshohlwelle vorliegt, so daß auch die Demontage vereinfacht wird.

Die Spannvorrichtung ist gemäß Anspruch 4 bevorzugt als Schrumpfscheibe ausgebildet, deren Klemmkonus im Bereich der ersten Stützfläche auf den Außenumfang der Abtriebshohlwelle gepreßt ist. Eine solche, an sich bekannte Schrumpfscheibe gewährleistet bei günstigen Abmessungen eine hohe und gut definierte Pressung des Außenumfangs der Hohlwelle und damit eine saubere Drehmomentübertragung. Grundsätzlich sind jedoch auch andere Spannvorrichtungen, wie etwa Ringfederspannvorrichtungen oder dgl., einsetzbar.

Gemäß Anspruch 5 sind die Spannvorrichtung und das dieser zugeordnete Wälzlager vorteilhaft in einem Gehäusedeckel des Getriebgehäuses angeordnet, so daß eine Montage und Demontage der Abtriebshohlwelle gegebenenfalls mit darin befestigter Antriebswelle der Arbeitsmaschine zusammen mit dem Deckelteil ohne Demontage der Spannvorrichtung und der zugeordneten Wälzlager möglich ist. Diese Zusammenfassung der Hohlwelle mit den damit verbundenen Bauteilen und des Gehäusedeckels zu einer Baugruppe ermöglicht weiterhin eine kostengünstige Vormontage.

Wenn dabei gemäß Anspruch 6 die Spannvorrichtung mit ihrem axial äußeren Rand bündig mit dem Getriebedeckel abschließt, so ist die rotierende Spannvorrichtung vom ruhenden Getriebedeckel sauber abgedeckt. Dabei können Klemmschrauben oder dgl. der Spannvorrichtung dennoch gut zugänglich gehalten werden und stören selbst in einer aus dem bündigen Abschluß axial herausragenden Position nicht wesentlich, da die Spannvorrichtung dennoch umfangsseitig vollständig abgedeckt gehalten werden kann. Das für eine ungehinderte Drehbewegung der Spannvorrichtung im Gehäusedeckel erforderliche Spiel kann gering gehalten werden, und so einen zusätzlichen Beitrag zur Abdichtung leisten.

Insbesondere bei einstufiger Bauweise des Getriebes und nicht allzu großem, erforderlichem Untersetzungverhältnis kann der Achsabstand zwischen Antriebswelle und Abtriebswelle ohne Berücksichtigung der radialen Erstreckung des Motorlagerschildes frei gewählt worden, und kann bei entsprechend geringem Achsabstand der Motorlagerschild den rückwärtigen, motorseitigen Endbereich der Abtriebswelle abdecken und so eine eigene Abschlußkappe oder dgl. ersetzen. Damit werden besondere Abdichtmaßnahmen im Bereich des rückwärtigen, motorseitigen Endes der Abtriebswelle entbehrlich.

Wenn die Spannvorrichtung, wie dies für Schrumpfscheiben an sich bekannt ist, gemäß Anspruch 8 eine Verspannung durch Druckmittel, insbesondere Hydraulikflüssigkeit, ermöglicht, so ist es zur Sicherung dieser Verspannungsstellung der Spannvorrichtung lediglich erforderlich, die Klemmschrauben bis zum Anstieg des Widerstandsmomentes einzudrehen, ohne definiert hohes Drehmoment aufbringen zu müssen. Dadurch kann die Betätigung der Klemmschrauben mit einfachem und insbesondere flachbauendem Werkzeug, wie einem flachen Maulschlüssel, problemlos erfolgen, und ist nur minimaler axialer Abstand zwischen den Klemmschrauben und dem axial benachbarten Bauteil, etwa einem benachbarten Wellenlager oder einem Lagerschild der Arbeitsmaschine oder dgl., einzuhalten, so daß axialer Bauraum gespart wird.

In besonders vorteilhafter Weise wird durch die Maßnahmen des Anspruchs 9 erreicht, daß die durch den Druckmitteldruck erzeugte Kraft im Bereich der Spannvorrichtung zur Bildung einer Abdrückeinrichtung genutzt wird, mit der eine Klemmverbindung zwischen der Antriebswelle der Arbeitsmaschine und der Abtriebshohlwelle des Getriebes aufgehoben werden kann. Dies ist von besonderem Vorteil bei konischer Ausbildung einer Stützfläche zwischen der Antriebswelle der Arbeitsmaschine und der Abtriebshohlwelle, da dort zur Erzielung absoluter Spielfreiheit für den Betrieb Reibschluß erzeugt wird. Zur Aufhebung dieses Reibschlusses oder dieser Klemmwirkung genügt bereits ein sehr geringer Abdrückhub, der problemlos über die Druckscheibe der Spannvorrichtung sowie die daran befestigten Klemmschrauben erzielbar ist.

Um einen gegebenenfalls sehr kleinen Druckhub der Druckscheibe voll für die Abdrückbewegung nutzen zu können, ist gemäß Anspruch 10 vorgesehen, daß der Anschlag an einem axial einstellbaren Stützelement angeordnet ist, das somit vor der Ausführung des Abdrückhubes bei Bedarf spielfrei an die Außenseite der Köpfe der Klemmschrauben angelegt werden kann.

Auch ohne Bewegung der Druckschreibe durch Druckmitteldruck kann ein sauberes Abdrücken der Antriebswelle der Arbeitsmaschine ohne Zuhilfenahme externer Werkzeuge gemäß Anspruch 11 dadurch erfolgen, daß am Außenumfang der Antriebswelle der Arbeitsmaschine eine axial wirkende Schraubvorrichtung befestigt ist, mit der durch Schraubbewegung eine entsprechende Abdrückkraft zwischen der Antriebswelle der Arbeitsmaschine und der Abtriebshohlwelle des Getriebes erzeugt werden kann. In vorteilhafter Ausgestaltung kann diese Schraubvorrichtung eine auf einem Außengewinde der Antriebswelle der Arbeitsmaschine sitzende Mutter sein oder aufweisen, die bei ihrer Schraubbewegung in Richtung auf das Getriebegehäuse eine erforderliche Abdrückkraft aufzubringen vermag und dabei beispielsweise die Außenseite der Köpfe der Klemmschrauben beaufschlagt. Eine solche Mutter kann wahlweise je nach Ausbildung des Getriebes bzw. der Spannvorrichtung mit oder ohne Druckmittelunterstützung verwendet werden, also die Abdrückkraft alleine durch mechanische Schraubbewegung gegen das Getriebegehäuse erzeugen oder aber den einstellbaren Anschlag für eine Mitnahme beim Druckhub der Druckscheibe bilden. Darüberhinaus kann eine solche Mutter im normalen Betrieb die zusätzliche Funktion einer axialen Fixierung anderer, auf der Antriebswelle der Arbeitsmaschine gelagerter Elemente übernehmen, beispielsweise im Falle eines Aufsteck-Getriebemotors das benachbarte Lager der Antriebswelle der Arbeitsmaschine axial spielfrei sichern.

Weitere Einzelheiten, Merkmale und Vorteile der Erfindung ergeben sich aus der nachfolgenden Beschreibung von Ausführungsbeispielen anhand der Zeichnung.

Es zeigt

Fig. 1       einen Axialschnitt durch eine erste Ausführungsform eines erfindungsgemäßen Getriebemotors und

Fig. 2       in einer Fig. 1 entsprechenden Darstellung eine abgewandelte Ausführungsform.

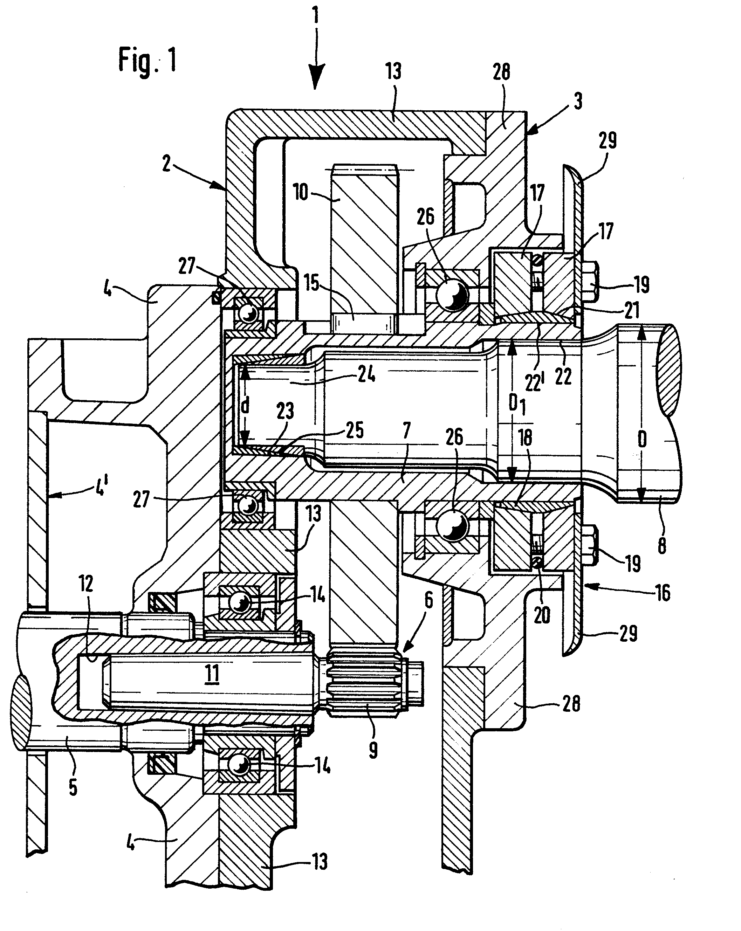

Ein in Fig. 1 mit 1 bezeichneter Aufsteck-Getriebemotor weist eine Motorseite 2 und eine Abtriebsseite 3 auf. Im Bereich eines antriebsseitigen Motorlagerschildes 4 ist ein in der Zeichnung nicht näher dargestellter Motor 4' angeflanscht. Eine Getriebeantriebswelle 5, die gleichzeitig Motorwelle ist, überträgt das Drehmoment des Motors 4' mittels einer Zahnradpaarung 6 auf eine Abtriebshohlwelle 7 des Aufsteck-Getriebemotors 1. Die Zahnradpaarung 6 weist ein kleines, treibendes Ritzel 9 sowie ein großes, angetriebenes Zahnrad 10 auf. Das Ritzel 9 ist als Steckritzel ausgebildet und steht mit einem konischen Schaftteil 11 mit einer entsprechenden Gegenkontur 12 der Antriebswelle 5 in kraftschlüssiger Verbindung, die mittels Reibschluß, hervorgerufen durch Einpressen des Ritzels 9 mit konischem Schaftteil 11 in den Bereich 12 der Welle 5, eine Drehmomentübertragung gewährleistet. Die Lagerung der Getriebeantriebswelle 5, die gleichzeitig Motorwelle ist, erfolgt einerseits in einem Gehäuse 13 des Aufsteck-Getriebemotors 1 mittels eines Lagers 14 und andererseits in dem nicht näher dargestellten antriebsgegenseitigen Lagerschild des Antriebsmotors 4'.

Das Zahnrad 10 ist in geeigneter Weise auf der Abtriebshohlwelle 7 befestigt, beispielsweise durch eine Paßfeder 15. Die Übertragung des Drehmomentes von dem Motor 4' auf die Antriebswelle 8 der Arbeitsmaschine erfolgt über eine kraftschlüssige Verbindung, die zwischen der Abtriebshohlwelle 7 und der Antriebswelle 8 der Arbeitsmaschine angeordnet ist. Zum Erzeugen dieser kraftschlüssigen Verbindung ist eine Spannvorrichtung 16 im Bereich der Abtriebsseite 3 des Aufsteck-Getriebemotors 1 vorgesehen. Die Spannvorrichtung 16 ist im Beispielsfalle als Schrumpfscheibe ausgebildet, die zwei Druckscheiben 17 besitzt, welche über Klemmschrauben 19, welche die in der Zeichnung rechte Druckscheibe durchsetzen und in die linke Druckschreibe eingeschraubt sind, verspannend gegeneinander gezogen werden können und dabei einen Klemmkonus 18 unter radialen Druck setzen. Radial außerhalb der Klemmschrauben 19 ist zwischen den Druckscheiben 17 ein O-Ring 20 angeordnet, der die Klemmschrauben 19 im Bereich der freistehenden Gewindeteile vor Wasser und Staub schützt. Der Klemmkonus 18 liegt mit seiner ebenen Unterseite auf einem Teilbereich 22' der Abtriebshohlwelle 7 auf. Durch Aufgleiten des Innenumfangs der Druckscheiben 17 auf einer satteldachförmigen Konusfläche 21 des Klemmkonus 18 wird so radiale Druckkraft auf den Außenumfang der Abtriebshohlwelle 7 im Bereich 22' ausgeübt. Der Bereich am Innenumfang der Abtriebshohlwelle 7, der dem Auflagebereich des Klemmkonus 18 gegenüberliegt, bildet eine Stützfläche 22. Im motorseitigen Bereich der Abtriebshohlwelle 7 ist am Innenumfang der Abtriebshohlwelle 7 eine zweite Stützfläche 23 ausgebildet. Die zweite Stützfläche 23 weist im wesentlichen konische Ausbildung auf und paßt auf einen entsprechend ausgeformten konischen endseitigen Teil der Antriebswelle 8 der Arbeitsmaschine, um dort einen spielfreien zusätzlichen Lagersitz momentengünstig in möglichst großem Abstand vom Lagersitz der Stützfläche 22 zu erzielen.

Steht für die Fertigung der Antriebswelle 8 und der Abtriebshohlwelle 7 keine NC-Maschine zur Verfügung, so kann es zweckmäßig sein, die konische Stützfläche 23 durch genormte konische Ringe 25 zu bilden, die auf die Antriebswelle 8 bzw. in die Abtriebshohlwelle 7 geschoben werden, wobei beide Wellenteile nur zylindrische Konturen zur Aufnahme der Ringe 25 aufweisen müssen.

Die Abstützung der Abtriebshohlwelle 7 im Gehäuse 13 erfolgt mittels zweier Wälzlager 26 und 27. Dabei ist eines der Lager 26 und 27, im Beispielsfalle das Lager 26, als Festlager ausgebildet, um eine axiale Lagesicherung der Abtriebshohlwelle 7 im Gehäuse 13 zu erreichen. Im Bereich der Abtriebsseite 3 des Getriebemotors 1 ist des weiteren ein Gehäusedeckel 28 vorgesehen, der so ausgebildet ist, daß er die Spannvorrichtung 16 mit geringem Spiel umgibt und das Lager 26, das ebenfalls im Gehäusedeckel 28 angeordnet und beispielsweise mit einer integrierten Dichtlippe versehen ist, infolge Labyrinthwirkung von außen vor Wasser und Schmutz schützt, wenn das Labyrinth mit Fett gefüllt ist.

Für den Fall, daß es die Betriebsbedingungen notwendig machen, kann im Bereich der Spannvorrichtung 16 noch eine radial nach außen sich erstreckende Schürze 29, die auch die Funktion eines Spritzringes übernehmen kann, angeordnet werden, um einen zusätzlichen Schutz gegen Wasser und Staub bei extremen Betriebsbedingungen zu gewährleisten. Daneben kommen selbstverständlich ergänzend oder alternativ auch andere zusätzliche Abdichtmaßnahmen in Frage, so beispielsweise am Außenumfang der Druckscheiben 17 eine berührungsfreie Labyrinthdichtung.

Die Ausbildung der Antriebswelle 8 der Arbeitsmaschine ist vorzugsweise gestuft zylindrisch, so daß sich der Durchmesser der Antriebswelle 8 der Arbeitsmaschine stufenweise von einem maximalen Durchmesser D im Bereich außerhalb des Gehäuses 13 bis auf einen minimalen Durchmesser d im Endbereich der Antriebswelle 8 der Arbeitsmaschine verjüngt. Der stufenweise Übergang vom maximalen zum minimalen Durchmesser erfolgt dabei nicht treppenartig, sondern unter Ausbildung von möglichst großen Radien, um die Gefahr der Kerbwirkung zu vermindern und damit die Bauteilfestigkeit und Verfügbarkeit zu erhöhen. Da der Getriebemotor 1 infolge der konischen Lagerung im Bereich der Stützfläche 23 keinen axialen Anschlag an seiner in Aufsteckrichtung vorderen Seite benötigt, kann der Übergangsradius zum maximalen Durchmesser D ebenfalls groß ausgebildet werden, so daß sich ein weicher Übergang mit minimaler Kerbwirkung ergibt und eine Überdimensionierung der Antriebswelle 8 der Arbeitsmaschine zur Berücksichtigung der Kerbwirkung nicht erforderlich ist.

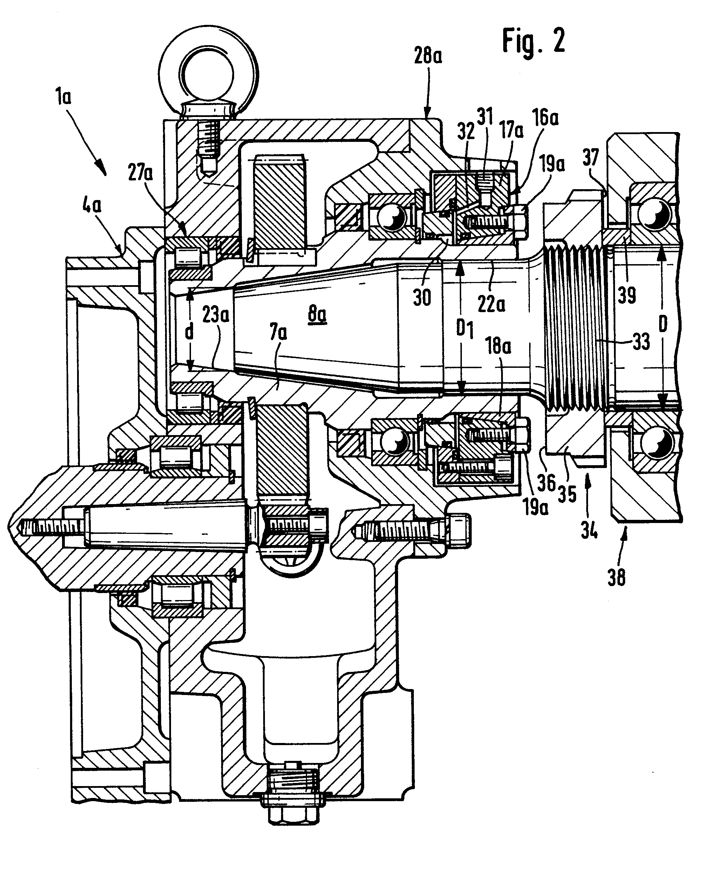

Im Übergangsbereich vom maximalen Durchmesser D zum minimalen Durchmesser d weist die Antriebswelle 8 der Arbeitsmaschine einen Durchmesser $D_1$ auf, der im wesentlichen so bemessen ist, daß er für einen Preßsitz mit der inneren Umfangsoberfläche, also der Stützfläche 22 der Abtriebshohlwelle 7, geeignet ist, um das erforderliche Drehmoment zu übertragen und eine gesicherte Abstützung zu gewährleisten. Dies gilt auch dann, wenn eine zweite Stützfläche 23 nicht vorgesehen ist. Bei günstigen Einsatzbedingungen, insbesondere im quasi-stationären Bereich, kann der Motor für ein erforderliches Drehmoment der Arbeitsmaschine in seinem Bauvolumen sehr klein gehalten werden. Die Belastung durch das dann geringe Eigengewicht und ggf. geringe Stöße von der Arbeitsmaschine her gestatten ggf. eine Abstützung in nur einer Stützfläche, nämlich der Stützfläche 22. Im instationären Betrieb hingegen, insbesondere bei hoher Schalthäufigkeit, werden die Ausmaße der Antriebsmotoren gegenüber dem notwendigen Getriebe bedeutend größer. Dies bedeutet eine größere Belastung der Antriebswelle 8 der Arbeitsmaschine infolge höherem Eigengewichtes des Aufsteck-Getriebemotors 1 und bei herabfallendem Walzgut zusätzliche Massenwirkung. In diesem Falle wird die weitere Abstützung an der zweiten Stützfläche 23 mit herangezogen, die eine Entlastung der Stützfläche 22 insbesondere von Kantenpressung ergibt und infolge der konischen Ausbildung der Stützfläche 23 auch die axiale Fixierung ergibt, so daß beim Übergang vom Durchmesser $D_1$ auf den Durchmesser D ein großer Übergangsradius gewählt werden kann. Zwischen dem Abschnitt der Antriebswelle 8 mit Durchmesser $D_1$ und dem Abschnitt mit Durchmesser d kann die Antriebswelle 8 auch konisch ausgeführt sein, wie in Fig. 2 veranschaulicht, um dem Idealfall eines Trägers gleicher Festigkeit zu entsprechen.

Die Montage des Aufsteck-Getriebemotors 1 auf die Antriebswelle 8 der Arbeitsmaschine erfolgt durch Aufstecken und axiales Verschieben des Aufsteck-Getriebemotors 1 bis zur Anlage im Bereich der Stützfläche 23. Durch Anziehen der Klemmschrauben 19 der Spannvorrichtung 16 wird der Endbereich der Abtriebshohlwelle 7, der die erste Stützfläche 22 bildet, in seinem Durchmesser elastisch kontrahiert und legt sich mit Preßsitz an den Bereich der Antriebswelle 8 der Arbeitsmaschine an, der den Durchmesser $D_1$ aufweist.

Mit dieser Verbindung können hohe Drehmomente auch im Reversierbetrieb übertragen und eine axiale Fixierung bewerkstelligt werden. Eine axiale Fixierung der Antriebswelle 8 im Bereich der Motorseite 2 kann somit entfallen, so daß der dortige Endbereich der Antriebswelle 8 durch den Motorschild 4 überdeckt werden kann, und der Motorschild 4 unter Wegfall einer besonderen Abschlußkappe sogar den Abschluß des Getriebegehäuses übernehmen kann. Auf diese Weise kann der Abstand zwischen den Achsen des Ritzels 9 und des Zahnrades 10 entsprechend den funktionell erforderlichen Abmessungen gegebenenfalls sehr klein gewählt werden, und ergibt sich eine kompakte und preisgünstige Bauweise.

In Fig. 2 ist ein Getriebemotor la veranschaulicht, der im grundsätzlichen Aufbau dem Getriebemotor 1 gemäß Fig. 1 entspricht. Da diese Entsprechungen aus der Zeichnung heraus ohne weiteres ersichtlich sind, ist eine erneute Beschreibung des grundsätzlich übereinstimmenden Aufbaues entbehrlich.

Unterschiede zwischen beiden Ausführungsformen bestehen insbesondere im Bereich des Gehäusedeckels, der in Fig. 2 mit 28a bezeichnet ist, sowie im Bereich der motorseitigen Stützfläche, die in Fig. 2 mit 23a bezeichnet ist.

Die Stützfläche 23a der Antriebswelle 8a der Arbeitsmaschine ist ausgehend vom Bereich mit dem Durchmesser $D_1$ mit einem konisch verjüngten Zwischenabschnitt zu dem endseitigen Bereich mit dem Durchmesser d versehen. Der Abschnitt mit dem Durchmesser d ist jedoch nicht zylindrisch, sondern ebenfalls von dem beispielhaften Durchmesser d aus nach hinten verjüngt ausgebildet, wie dies bei einer Herstellung auf NC-gesteuerten Maschinen ohne besonderen Aufwand möglich ist. Die Abtriebshohlwelle 7a ist motorseitig, also an ihrem Ende im Bereich der Stützflächen 23 offen, wobei die Funktion einer Abschlußkappe auch für das Wälzlager 27a vom Motorschild 4 übernommen ist. Funktionell entsprechen sich insoweit die Ausführungsformen gemäß den Fig. 1 und 2.

Die Spannvorrichtung 16a bei der Ausführungsform gemäß Fig. 2 weist nur eine Druckscheibe 17a auf, in welche die Klemmschrauben 19a eingreifen, wobei sich die Klemmschrauben 19a zwischen ihrem eingeschraubten Ende und ihrem Kopf durch einen radialen Flansch des Klemmkonus 18a hindurch erstrecken. Ein Anziehen der Klemmschrauben 19a führt somit zu einem Verspannen der Druckscheibe 17a auf der konischen Fläche des Klemmkonus 18a und damit entsprechend zur Erzeugung radialer Kräfte zum Festklemmen im Stützbereich 22a, wie dies im Zusammenhang mit Fig. 1 im einzelnen erläutert ist.

An der motorseitigen Seitenfläche der Druckscheibe 17a ist ein kreisringförmiger Druckraum 30 ausgebildet, der über einen Anschluß 31 sowie einen in der Druckscheibe 17a eingebrachten Kanal 32 mit Druckmittel füllbar ist. Bei Druckbeaufschlagung des Druckraumes 30 etwa mit Hydrauliköl über den Anschluß 31 wirkt damit auf die Druckscheibe 17a eine in der gewählten Darstellung nach rechts, also zur Abtriebsseite hin gerichtete Kraft, die ebenso wie eine mechanische, durch Betätigung der Klemmschrauben 19a in der geschilderten Weise aufgebrachte Kraft zu einer Verspannung des Klemmkonus 18a führt. Die Klemmschrauben 19a durchsetzen den Kragen oder Flansch des Klemmkonus 18a berührungsfrei, so daß sie bei einer Bewegung der Druckscheibe 17a nach rechts ohne gleichzeitige Bewegung des mit Preßsitz angeordneten Klemmkonus 18a nach rechts bewegt werden, derart, daß die Köpfe der Klemmschrauben 19a Abstand vom Kragen oder Flansch der Klemmkonus 18a erhalten. Auf diese Weise ist es möglich, durch den Druckmitteldruck definiert die gewünschte Verspannung des Klemmkonus 18a zu erzeugen, worauf die in der gewählten Darstellung rechts ausragenden Klemmschrauben 19a bis zur Anlage der Unterseite ihrer Köpfe an der Außenfläche des Flansches oder Kragens des Klemmkonus 18a bzw. bis zum fühlbaren Widerstandsanstieg eingedreht werden können. Wird sodann der Druckmitteldruck abgebaut, so wird die Druckscheibe 17a über die Gewindegänge der Klemmschrauben 19a in der Verspannungsstellung gehalten. Soweit elastische Rückfederungen zu befürchten sind, genügt es, den Druckmitteldruck etwas höher zu wählen, als er für die gewünschte Verspannung notwendig ist, so daß nach elastischer Rückfederung im Bereich der Klemmschrauben 19a exakt und reproduzierbar der gewünschte Anpreßdruck der Druckscheibe 17a und damit die gewünschte Verspannung erzielt wird.

In besonders bevorzugter Weise ist auf einem Außengewinde 33 der Antriebswelle 8a im Bereich von deren Durchmesser D eine insgesamt mit 34 bezeichnete Schraubvorrichtung angebracht, die im Beispielsfalle aus einer Mutter 35 besteht. Die Mutter 35 bietet auf ihrer Motorseite eine Anschlagfläche 36 und im Beispielsfalle auf der gegenüberliegenden Seite eine Anschlagfläche 37. In der gewählten Darstellung, die der Betriebsstellung entspricht, sichert die Mutter 35 mit ihrer Anschlagfläche 37 den spielfreien Zustand eines benachbarten Lagers 38, wozu die Mutter 35 mit einem gewünschten Moment gegen einen Druckring 39 des Lagers 38 gezogen ist.

Wird die Mutter 35 aus der gewählten Darstellung auf dem Außengewinde 33 derart verdreht, daß sie in Richtung auf den Getriebemotor 1a wandert, so gelangt sie schließlich mit ihrer Anschlagfläche 36 in Anlage an die Außenseite der Köpfe der Klemmschrauben 19a. Eine Weiterdrehung der Mutter 35 mit entsprechendem Moment führt infolge der Abstützung der Mutter 35 über die Anschlagfläche 36 zu einer Kraftbeaufschlagung der Antriebswelle 8a in Richtung auf die Arbeitsmaschine bzw.

in der gewählten Darstellung auf das Lager 38. Die so auf das Ende der Antriebswelle 8a aufgebrachten Zugkräfte lösen den Klemmsitz im Bereich der Stützfläche 23a, so daß die Antriebswelle 8a aus ihrer kraftschlüssigen Verbindung mit der Abtriebshohlwelle 7a ausgehoben wird. Die Schraubvorrichtung 34 dient damit als mechanische Abdrückvorrichtung.

Während eine solche Funktion der Schraubvorrichtung 34 auch bei der Ausführungsform gemäß Fig. 1 ohne weiteres möglich ist, bietet die Ausführungsform gemäß Fig. 2 durch den im Druckraum 30 erzeugbaren Druckmitteldruck in besonders vorteilhafter Weise eine zusätzliche vereinfachte Möglichkeit für ein Abdrücken der Antriebswelle 8a. Hierzu wird die die Schraubvorrichtung 34 im Beispielsfalle bildende Mutter 35 lediglich an die Außenseiten der Köpfe der Klemmschrauben 19a angenähert und bevorzugt angelegt, wonach bei Druckmittelaufbau im Druckraum 30 durch die entsprechende Verspannungsbewegung der Druckscheibe 17a und damit der Köpfe der Klemmschrauben 19a nach rechts entsprechende Abdrückkräfte erzeugt werden, die das Lösen der Reibschlußverbindung zwischen der Antriebswelle 8a und der Abtriebshohlwelle 7a ohne mechanische Krafteinwirkung bewirken. Hierzu braucht die zugeordnete Anschlagfläche 36 nicht an einer Schraubvorrichtung 34 ausgebildet zu sein, sondern genügt jede Ausbildung einer Anschlagfläche 36 an einem Element, das gegenüber der Antriebswelle 8a axial in Richtung auf die Arbeitsmaschine gestützt ist. Um eine freie Zugänglichkeit der Köpfe der Klemmschrauben 19a im Zuge der Endmontage und Demontage zu ermöglichen, ist es jedoch bevorzugt, die Anschlagfläche 36 in einer Ruhestellung vorzusehen, die ausreichenden Abstand von den Köpfen der Klemmschrauben 19a besitzt. Zur Überführung der Anschlagfläche 36 aus der im Abstand liegenden Ruhestellung in eine Arbeitsstellung, in der die Anschlagfläche 36 in geringem Abstand vor den Köpfen der Klemmschrauben 19a oder direkt in Anlage damit liegt, ist sodann das Stützelement, das im Beispielsfalle durch die Schraubvorrichtung 34 gebildet wird, axial auf der Antriebswelle 8a verschieblich und feststellbar gehalten. Auch hierfür eignet sich die veranschaulichte Mutter 35, die somit bei zur Verfügung stehendem Druckmitteldruck als Stützelement dient, ohne solchen Druckmitteldruck jedoch selbst eine mechanische Abdrückvorrichtung bilden kann, und dabei in jedem Falle bei Bedarf an der gegenüberliegenden Seite mit ihrer Anschlagfläche 37 eine zusätzliche Aufgabe im Sinne einer axialen Druckbelastung eines Elementes übernehmen kann.

In jedem Fall gewährleistet die geschilderte Abdrückmöglichkeit eine schnelle, störungs- und beschädigungssichere Demontage auch bei fest sitzender Reibschlußverbindung zwischen der Antriebswelle 8 bzw. 8a und der Abtriebshohlwelle 7 bzw. 7a; daher kann der Neigungswinkel im Bereich der Stützfläche 23 bzw. 23a frei ohne Berücksichtigung eventuell auftretender hoher Reibkräfte den jeweiligen Erfordernissen entsprechend gewählt werden.

Zusammenfassend ist daher festzustellen, daß der erfindungsgemäße Getriebemotor, der als Aufsteck-Getriebemotor 1 verwendet werden, jedoch bei Bedarf auch anders, beispielsweise als angeflanschter Getriebemotor oder als Getriebemotor in Fußausführung dienen kann, den Einsatz auch von einstufigen Getriebemotoren in solchen Fällen erlaubt, in denen bisher in der Praxis zweistufige Getriebemotoren in Flachbauweise verwendet wurden, oder aber im Falle eines dennoch einstufigen Aufbaues ein unwirtschaftlich großer Achsabstand erzeugt werden mußte. Die kompakte Bauform sowie die leichte Montage und Demontage tragen dazu bei, Getriebemotoren dieser Art auch da einzusetzen, wo bislang eine zeitraubende Montage und Demontage die Handhabung erschwerte. Dies gilt insbesondere bei Antrieben mit hoher Schalthäufigkeit, wo einerseits ein fester Sitz ohne Spielanteil der Antriebswelle 8 bzw. 8a in der Abtriebshohlwelle 7 bzw. 7a unbedingt erforderlich ist und gleichzeitig eine einfache und schnelle Montage und Demontage gefordert wird, um Kosten auch bei Ausfall einer Antriebseinheit, die unter Umständen einen großen Produktionsausfall und damit enorme Ausfallkosten nach sich zieht, in erträglichen Grenzen zu halten. Damit ergibt sich insgesamt ein preisgünstiger Getriebemotor, insbesondere Aufsteck-Getriebemotor, der geringen Wartungsaufwand erfordert und insbesondere im Hinblick auf die schnellen Montage- und Demontagemöglichkeiten große Verfügbarkeit besitzt.

Klose GmbH & Co. KG

5912 Hilchenbach

55 KL01 27 2/öc
27. Juli 1984

**Patentansprüche**

1. Getriebemotor, insbesondere Aufsteck-Getriebemotor, mit einer Getriebeantriebswelle (5), welche durch den antriebsseitigen Motorlagerschild (4) in das Getriebegehäuse (13) ragt, und mit einer Abtriebshohlwelle (7; 7a), welche mit der Getriebeantriebswelle (5) über mindestens eine formschlüssige Getriebestufe (6) verbunden und in dem Getriebegehäuse (13) drehbar gelagert ist, und in welche die Antriebswelle (8; 8a) einer Arbeitsmaschine, insbesondere eines Förderorgans, einsteckbar ist, dadurch gekennzeichnet, daß die innere Umfangsfläche der Abtriebshohlwelle (7; 7a) in mindestens einem Teilbereich (22') eine Stützfläche (22; 22a) aufweist, mit welcher mindestens ein Teilbereich der radialen Umfangsfläche der Antriebswelle (8; 8a) der Arbeitsmaschine abstützbar ist, wobei die Abtriebshohlwelle (7; 7a) im Bereich der Stützfläche (22; 22a) an ihrem Außenumfang gegenüber dem Getriebegehäuse (13) in einem Wälzlager (26) gelagert ist, und daß im Bereich der vom Motor (4') abgewandten Abtriebsseite (3) des Getriebegehäuses (13) eine von dieser Seite her zugängliche Spannvorrichtung (16; 16a) vorgesehen ist, mit welcher über die Stützfläche (22; 22a) eine kraftschlüssige Verbindung mit der Antriebswelle (8; 8a) der Arbeitsmaschine erzeugbar ist.

2. Getriebemotor nach Anspruch 1, dadurch gekennzeichnet, daß an der inneren Umfangsfläche der Abtriebshohlwelle (7; 7a) eine weitere, zweite Stützfläche (23; 23a) vorgesehen ist, die im Bereich der Motorseite (2) des Getriebegehäuses (13) angeordnet ist, und daß die Abtriebshohlwelle (7; 7a) im Bereich der zweiten Stützfläche (23; 23a) an ihrem Außenumfang gegenüber dem Getriebegehäuse (13) in einem Wälzlager (27; 27a)) gelagert ist.

3. Getriebemotor nach Anspruch 1 oder 2, dadurch gekennzeichnet, daß eine der Stützfläche (22, 23; 22a, 23a), insbesondere die zweite Stützfläche (23; 23a) konisch ausgebildet ist.

4. Getriebemotor nach einem der Ansprüche 1 bis 3, dadurch gekennzeichnet, daß die Spannvorrichtung (16; 16a) eine Schrumpfscheibe ist, deren Klemmkonus (18; 18a) auf die äußere Umfangsfläche der Abtriebshohlwelle (7; 7a) im Bereich der ersten Stützfläche (22; 22a) preßbar ist.

5. Getriebemotor nach einem der Ansprüche 1 bis 4, dadurch gekennzeichnet, daß die Spannvorrichtung (16; 16a) und das dieser zugeordnete Wälzlager (26) in einem Gehäusedeckel (28; 28a) des Getriebegehäuses (13) angeordnet sind.

6. Getriebemotor nach einem der Ansprüche 1 bis 5, dadurch gekennzeichnet, daß die Spannvorrichtung (16; 16a) mit ihrem axial äußeren Rand wenigstens annähernd bündig mit dem Getriebegehäuse (13), insbesondere dem Getriebedeckel (28; 28a) abschließt und von diesem mit Spiel umgeben ist.

7. Getriebemotor nach einem der Ansprüche 1 bis 6, dadurch gekennzeichnet, daß das Getriebegehäuse (13) im Bereich der zweiten Stützfläche (23; 23a) und des zweiten Wälzlagers (27; 27a) auf der Motorseite (2) durch den Lagerschild (4; 4a) des Motors (4') abgedeckt und verschlossen ist.

8. Getriebemotor nach einem der Ansprüche 1 bis 7, dadurch gekennzeichnet, daß die Spannvorrichtung (16; 16a) eine axial bewegliche Druckscheibe (17; 17a) aufweist, die in einer Bewegungsrichtung einen Klemmkonus (18; 18a) verspannt und in der Gegenrichtung entlastet, daß die Druckscheibe (17; 17a) über eine Mehrzahl von umfangsseitig verteilt angeordneten, in die Druckscheibe eingeschraubten Klemmschrauben (19; 19a) in die verspannende Bewegungsrichtung ziehbar ist, daß die Druckscheibe (17; 17a) auf ihrer bezüglich der verspannenden Bewegungsrichtung rückwärtigen Seite durch Druckmitteldruck beaufschlagbar ist, und daß die verspannende Bewegungsrichtung vom Motor (4') wegweist und die Köpfe der Klemmschrauben (19; 19a) an der dem Motor (4') abgewandten radialen Außenfläche der Spannvorrichtung (16; 16a) angeordnet sind.

9. Getriebemotor nach Anspruch 8, dadurch gekennzeichnet, daß an der axialen Außenseite der Köpfe der Klemmschrauben (19; 19a) eine Anschlagfläche (36) angeordnet ist, die durch die Köpfe der Klemmschrauben (19; 19a) beaufschlagbar und mit der Antriebswelle 8; 8a) der Arbeitsmaschine verbindbar oder verbunden ist.

10. Getriebemotor nach Anspruch 9, dadurch gekennzeichnet, daß die Anschlagfläche (36) an einem Stützelement (Mutter 35) angeordnet ist, welches auf der Antriebswelle (8; 8a) der Arbeitsmaschine axial verschiebbar und feststellbar gehalten ist.

11. Getriebemotor nach einem der Ansprüche 1 bis 10, dadurch gekennzeichnet, daß am Umfang der Antriebswelle (8; 8a) der Arbeitsmaschine eine axial wirkende Schraubenvorrichtung (34) befestigt ist, mit der im Zuge der Schraubbewegung eine axiale Abdrückkraft auf die Antriebswelle (8; 8a) der Arbeitsmaschine aufbringbar ist.

12. Getriebemotor nach Anspruch 11, dadurch gekennzeichnet, daß die Schraubvorrichtung (34) eine auf einem Außengewinde (33) der Antriebswelle (8; 8a) der Arbeitsmaschine sitzende Mutter (35) aufweist.

Fig. 1

0133967

Fig. 2

**Europäisches Patentamt**

## EUROPÄISCHER RECHERCHENBERICHT

### EINSCHLÄGIGE DOKUMENTE

EP 84108935.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 1 091 070 (DEMAG) <br> * Gesamt * <br> -- | 1,2 | F 16 H 1/06 <br> B 21 B 39/02 <br> F 16 D 1/08 |
| A | AT - B - 291 164 (EISENWERK SULZA-WERFEN) <br> * Gesamt * <br> -- | 4,8 | |
| A | DE - A1 - 3 149 067 (DURAND) <br> * Gesamt * <br> -- | 8 | |
| A | FR - A - 2 191 654 (SE. NAT. IND. AEROSPATIALE) <br> * Gesamt * <br> -- | 9,11, 12 | RECHERCHIERTE SACHGEBIETE (Int. Cl.4) |
| A | GB - A - 1 586 703 (PILGRAM ENGINEERING) <br> ---- | 10 | F 16 H 1/00 <br> F 16 H 49/00 <br> F 16 D 1/00 <br> B 21 B 27/00 <br> B 21 B 39/00 |

Der vorliegende Recherchenbericht wurde für alle Patentansprüche erstellt.

| Recherchenort | Abschlußdatum der Recherche | Prüfer |
|---|---|---|
| VIENNA | 10-10-1984 | SCHATEK |